# EUROPÄISCHE PATENTSCHRIFT

(11) **EP 1 722 921 B1**
(45) Veröffentlichungstag und Bekanntmachung des Hinweises auf die Patenterteilung: **12.12.2007**
(21) Anmeldenummer: 05715597.0
(22) Anmeldetag: 28.02.2005
(51) Int. Cl.: B23Q 1/01, B23Q 1/03, B23Q 1/54

(54) **WERKZEUGMASCHINE MIT EINEM UMRÜSTBAREN WERKSTÜCKSPANNTISCH**
MACHINE TOOL COMPRISING AN ADJUSTABLE CLAMPING TABLE FOR WORKPIECES
MACHINE-OUTIL COMPORTANT UN ETABLI MODULABLE

(30) Priorität: 03.03.2004 DE 102004010984
(43) Veröffentlichungstag der Anmeldung: 22.11.2006
(73) Patentinhaber: OPS-Ingersoll Funkenerosion GmbH, 57299 Burbach (DE)
(72) Erfinder: STEIN, Peter, 56479 Bretthausen (DE)
(74) Vertreter: Grosse, Wolf-Dietrich Rüdiger
(86) Internationale Anmeldenummer: PCT/EP2005/002089
(87) Internationale Veröffentlichungsnummer: WO 2005/084881

(56) Entgegenhaltungen:
- DE-U1- 9 422 019

## Beschreibung

Die Erfindung betrifft eine Werkzeugmaschine mit einem Maschinengestell zur spanenden Bearbeitung eines Werkstücks, die eine Werkzeughalterung aufweist, die relativ zu einer unterhalb der Werkzeughalterung angeordneten Werkstückaufnahme translatorisch in drei Achsrichtungen bewegbar angeordnet ist, wobei die Werkstückaufnahme so ausgebildet ist, dass sie das Werkstück um mindestens eine Achse schwenken kann (siehe, z.B., DE-9422019-U).

Werkzeugmaschinen dieser Gattung sind, insbesondere als Fräsmaschinen ausgeführt, im Stand der Technik hinlänglich bekannt. Die Maschinen haben zumeist drei translatorische Bearbeitungsachsen, d. h. ein spanendes Werkzeug, z. B. ein Fräswerkzeug, kann in drei in der Regel zueinander senkrecht stehenden Raumachsen translatorisch bewegt und so relativ zu einem Werkstück an jedem beliebigen Ort positioniert werden.

Die Verbesserung der Steuerungen und der Programmiersysteme für die genannten Werkzeugmaschinen haben dazu geführt, dass häufig neben den drei translatorischen (linearen) Achsen weitere Schwenkachsen in der Werkzeugmaschine vorgesehen werden. Mit den Schwenkachsen ist es möglich, das Werkstück relativ zum Werkzeug zu verschwenken, um so in einer Aufspannung bis zu fünf Seiten des Werkstücks zu bearbeiten. Hiermit ist es auch möglich, komplexe Geometrien erheblich wirtschaftlicher zu bearbeiten, als dies mit Maschinen mit nur drei translatorischen Achsen möglich ist.

Hinsichtlich der Möglichkeit, zusätzlich zu den drei translatorischen Achsen zwei Schwenkachsen vorzusehen, sind grundsätzlich zwei unterschiedliche Konzepte möglich.

Nach einem ersten Konzept wird das Werkzeug zusätzlich zur seiner translatorischen Bewegung verschwenkbar angeordnet. In diesem Falle weist die Werkzeughalterung einen Schwenkkopf auf, so dass das Werkzeug entsprechend bewegt werden kann.

Alternativ hierzu ist es auch möglich, die Werkstückaufnahme verschwenkbar auszubilden. In diesem Falle wird das Werkstück von einem Schwenktisch aufgenommen, mit dem es in eine gewünschte geschwenkte Position gebracht werden kann.

Wird das Werkzeug verschwenkbar ausgebildet, spielt die Größe und Masse des Werkstücks, das dann auf dem Maschinengestell ruhend gelagert werden kann, in vorteilhafter Weise keine Rolle. Allerdings hat dies nachteilig zur Folge, dass das Schwingungsverhalten des Werkzeugs negativ beeinflusst wird, da sich die Masse im Bereich des Werkzeugs erhöht. Des weiteren wird durch den im Werkzeugbereich benötigten Schwenkkopf der Verfahrbereich der Werkzeugmaschine begrenzt bzw. reduziert. Daher kommt dieses Konzept üblicherweise dann zum Einsatz, wenn es die Werkstückabmessungen bzw. das Werkstückgewicht nicht mehr zulassen, das Werkstück zu schwenken.

Im Falle der Verschwenkung des Werkstücks gibt es wiederum zwei mögliche Vorgehensweisen:

Nach einer ersten Möglichkeit dient ein relativ zum Maschinengestell schwenkbar angeordneter Tisch als Werkstückspannmöglichkeit, d. h. das Werkstück wird auf dem Schwenktisch platziert.

Eine alternative Konzeption stellt auf einen üblichen Maschinentisch ab, auf den ein Schwenktisch aufgesetzt ist.

Die letztgenannte Vorgehensweise stellt jedoch eine Kompromisslösung dar: Das Verschwenken des Werkstücks um zumindest eine Schwenkachse erfolgt in diesem Falle nicht im Schwerpunkt, wodurch der Verfahrbereich der Werkzeugmaschine und die Möglichkeit der Lastaufnahme auf dem Schwenktisch eingeschränkt werden.

Zwar lassen sich bei einem in das Maschinengestell eingebauten Schwenktisch diese Nachteile vermeiden; hier ist die Werkzeugmaschine dann jedoch nicht mehr in der Lage, Werkstücke zu bearbeiten, die aufgrund ihrer Abmessungen bzw. ihres Gewichts nicht auf den eingebauten Schwenktisch passen.

Im Stand der Technik sind hierzu vielfältige Detaillösungen bekannt, die sich jeweils mit einem spezifischen Thema beschäftigen.

Beispielsweise offenbart die EP 1 262 275 A1 eine Werkstückhalteeinrichtung für eine Bearbeitungsmaschine, die eine schwenkbar zwischen zwei Lagerwandungen gelagerte Schwenkbrücke hat. Die Lagerwandungen begrenzen jeweils seitlich einen Arbeitsbereich. Ein Antriebsmotor dient zum Verschwenken der Schwenkbrücke, der außerhalb des Arbeitsbereichs an einer Außenseite der Lagerwandungen angeordnet ist. Zum Schwenken dient ein Zahnkranz, der im Bereich der Innenseiten der Lagerwandungen angeordnet ist. Die Lagerstellen bzw. die Lagerzapfen der Schwenkbrücke müssen dadurch kein Antriebsdrehmoment übertragen und sind keiner Torsionsbeanspruchung ausgesetzt.

Aus der EP 0 964 771 B1 ist ein Werkstückaufspanntisch zur Aufnahme von zu bearbeitenden Werkstücken bekannt, der drehbar, schwenkbar und verstellbar ist und somit entsprechende Freiräume besitzt. Hier kommt ein Magnethaltering als tragendes Gehäuse zur Aufnahme einer Spanneinrichtung mit Winkelverstell- und Positioniereinrichtung zum Einsatz.

Schließlich geht aus der EP 0 666 132 B1 eine Antriebsvorrichtung hervor, die durch Mehrfachachsenüberlagerungs-Zweiwinkelverschiebung zweier überlagerter Strukturen gebildet wird. Die Antriebsvorrichtung hat eine erste angetriebene Scheibe sowie eine zweite angetriebene Scheibe zum Tragen eines Werkstücks sowie eine Einrichtung zum Anbringen der zweiten Scheibe an der ersten Scheibe, so dass die zweite Scheibe drehbar ist. Hierdurch wird eine Exzenterantriebsvorrichtung geschaffen.

Im Lichte der diskutierten Vor- und Nachteile der jeweiligen Bauformen von Werkzeugmaschinen mit Schwenkköpfen bzw. Schwenktischen liegt der Erfindung die Aufgabe zugrunde, eine Werkzeugmaschine so auszubilden, dass die erläuterten Nachteile umgangen werden und ein optimaler Nutzen aus dem Fertigungssystem gezogen und die Werkzeugmaschine in ihrer Einsetzbarkeit verbessert werden kann.

Die Lösung dieser Aufgabe durch die Erfindung ist gekennzeichnet durch einen Werkstückspanntisch, der so ausgebildet ist, dass er, die Werkstückaufnahme überbrückend, fest am Maschinengestell angeordnet werden kann.

Eine erste Weiterbildung sieht vor, dass die Werkstückaufnahme so ausgebildet ist, dass sie das Werkstück um zwei zueinander senkrechte Achsen verlagern kann, von denen die eine Achse eine Schwenkachse und die andere Achse eine Drehachse ist.

Der Werkstückspanntisch kann mit einer Schraubverbindung am Maschinengestell festlegbar sein.

Eine besonders gute Handhabbarkeit des Werkstückspanntisches ergibt sich, wenn dieser an seinen seitlichen Endbereichen je zwei auskragende Arme aufweist, mit denen er am Maschinengestell festlegbar ist.

Der Werkstückspanntisch kann weiterhin an seiner im in der Werkzeugmaschine angeordneten Zustand der Werkzeughalterung zugewandten Seite eine Anzahl Befestigungselemente, insbesondere T-Nuten, aufweisen.

Mit Vorteil ist vorgesehen, dass der Werkstückspanntisch in mindestens einem Schnitt entlang einer Hauptachsrichtung der Werkzeugmaschine, vorzugsweise in zwei Schnitten zweier zueinander senkrecht angeordneter Hauptachsrichtungen der Werkzeugmaschine, eine im wesentlichen U-förmige Kontur aufweist.

Bevorzugt ist der Werkstückspanntisch als Gusskonstruktion ausgeführt.

Schließlich bewährt sich das Erfindungskonzept besonders bei Fräsmaschinen.

Das erfindungsgemäße Konzept schafft also eine Werkzeugmaschine, insbesondere eine Fräsmaschine, bei der ein Schwenktisch zum Verschwenken des Werkstücks so in das Maschinengestell eingebaut wird, dass dieser mit einem nachträglich bei Bedarf einzusetzenden festen Werkstückspanntisch überbaut werden kann.

Der sich daraus ergebende Vorteil besteht darin, dass die Werkzeugmaschine einerseits bei großen Werkstücken mit eingesetztem Werkstückspanntisch als dreiachsige Maschine genutzt werden kann, andererseits aber auch bei kleinen Werkstücken ohne Werkstückspanntisch, wobei dann durch die Schwenkmöglichkeit der Werkstückaufnahme eine fünfachsige Fertigung möglich ist.

In der Zeichnung ist ein Ausführungsbeispiel der Erfindung dargestellt. Es zeigen:
- Fig. 1: schematisch die Vorderansicht einer Fräsmaschine bei der Bearbeitung eines kleinen Werkstücks,
- Fig. 2: die zu Fig. 1 analoge Ansicht bei eingesetztem Werkstückspanntisch für die Bearbeitung eines großen Werkstücks,
- Fig. 3: in dreidimensionaler Darstellung eine Fräsmaschine, vorbereitet für die Bearbeitung eines kleinen Werkstücks, und
- Fig. 4: die Darstellung gemäß Fig. 3, wobei nunmehr ein Werkstückspanntisch für die Bearbeitung großer Werkstücke eingesetzt ist.

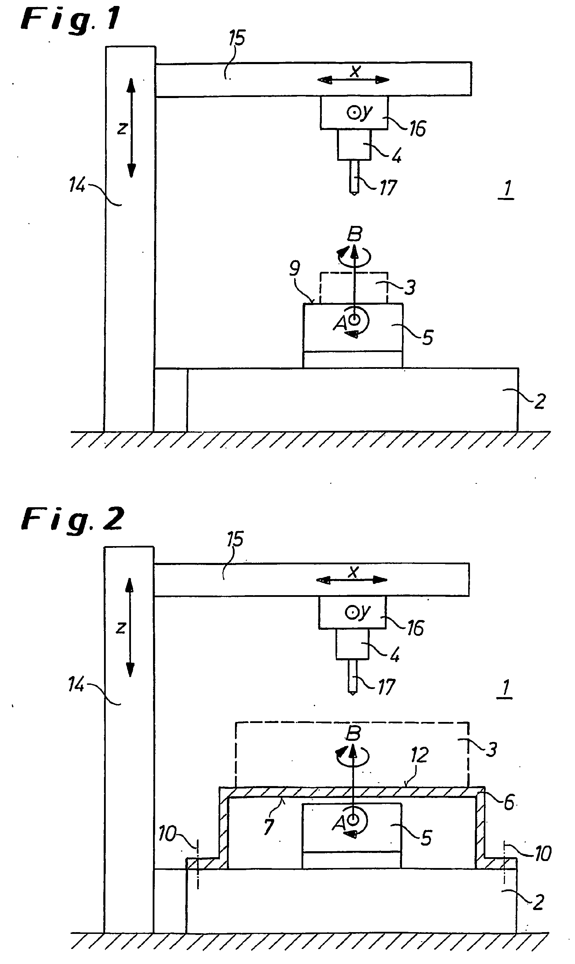

In Fig. 1 ist eine Fräsmaschine schematisch dargestellt, die ein Maschinengestell 2 aufweist, das auf dem Untergrund fest angeordnet ist. An einer sich vertikal erstreckenden Führungsschiene 14 ist ein Querbalken 15 angeordnet, an dem wiederum ein weiterer Querbalken 16 positioniert ist. Der Querbalken 16 besitzt eine Werkzeughalterung 4, die einen Fräser 17 trägt.

Durch nicht dargestellte Bewegungselemente kann die Werkzeughalterung 4 und mit ihr der Fräser 17 in den drei Achsrichtungen x, y und z bewegt werden, so dass der Fräser jeden beliebigen Ort im Raum einnehmen kann.

Ein mit gestrichelten Linien eingezeichnetes Werkstück 3 ist auf einer Werkstückaufnahme 5 befestigt, und zwar auf deren Oberseite 9. Die Werkstückaufnahme 5 kann um zwei zueinander senkrechte Achsen A und B positioniert bzw. verlagert werden, so dass bis zu fünf Seiten des Werkstücks 3 dem Fräser 17 zugewandt werden können; abgesehen von der Fläche des Werkstücks 3, die auf der Oberseite 9 der Werkstückaufnahme 5 befestigt ist, kann das Werkstück 3 daher allseitig vom Fräser 17 bearbeitet werden.

Die in Fig. 1 skizzierte Anordnung eignet stich optimal, um kleinere Werkstücke 3 zu bearbeiten. Zum einen ist der Fräser 17 bzw. die Werkzeughalterung 4 durch die geringe Masse dieser Elemente relativ schwingungsarm an der Führungsschiene 14 bzw. an den Querbalken 15 und 16 gelagert. Andererseits kann das Werkzeug in seine optimal geschwenkte Position verbracht werden, um es an der gewünschten Fläche bearbeiten zu können.

Ungeeignet ist das in Fig. 1 skizzierte System jedoch dann, wenn das Werkstück 3 groß und schwer ist. In diesem Falle bietet die Werkstückaufnahme 5 keine hinreichende Halterung für das Werkstück 3.

Die Werkzeugmaschine 1 wird für die Bearbeitung eines großen und/oder schweren Werkstücks 3 in diesem Falle, wie aus Fig. 2 ersichtlich, umgerüstet:

Auf das Maschinengestell 2 wird ein Werkstückspanntisch 6 aufgesetzt, der die Werkstückaufnahme 5 überbrückt. Dabei wird das wiederum mit gestrichelten Linien dargestellte Werkstück 3 auf der Seite 12 des Werkstückspanntisches 6 angeordnet, die der Werkzeughalterung 4 bzw. dem Fräser 17 zugewandt ist. Der Werkstückspanntisch 6 wird dabei mit nur sehr schematisch angedeuteten Schrauben 10 am Maschinengestell 2 fixiert.

Sowohl im Schnitt entlang der Hauptachsrichtung x als auch im Schnitt entlang der hierzu senkrechten Hauptachsrichtung y ist der Werkstückspanntisch 6 im Querschnitt U-förmig ausgebildet. Er stellt also eine haubenartige, eigensteife Struktur dar, die auf dem Maschinengestell 2 platziert ist.

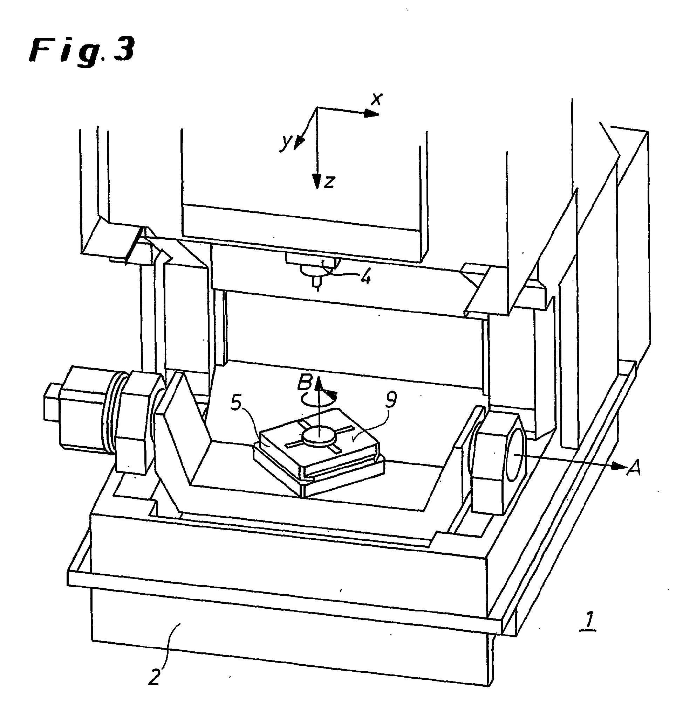

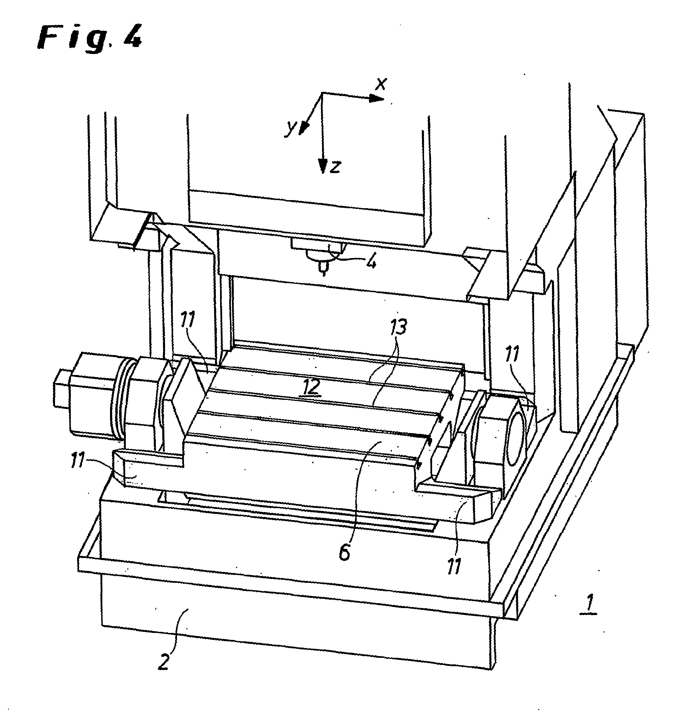

In den Figuren 3 und 4 ist eine analoge Situation zu den Fig. 1 und 2 zu sehen, wobei hier eine etwas andere konstruktive Ausgestaltung vorgesehen ist.

Die Werkstückaufnahme 5 ist auch hier um zwei Achsen schwenk- und drehbar ausgebildet, nämlich um die sich horizontal erstreckende Achse A und die sich vertikal erstreckende Drehachse B. Auch hiermit kann ein auf der Oberseite der Werkstückaufnahme 5 platziertes Werkstück 3 fast allseitig bearbeitet werden.

Wie aus Fig. 4 zu sehen ist, wird für die Bearbeitung großer Werkstücke auch hier der Werkstückspanntisch 6 auf dem Maschinengestell 2 platziert und dort fixiert. Die Werkstückaufnahme 5 wird auch hier vom Werkstückspanntisch 6 überbrückt. Zur Festlegung des Werkstückspanntisches 6 am Maschinengestell 2 dienen insgesamt vier seitlich auskragende Arme 11. Das Werkstück 3 (nicht dargestellt) wird auf der Oberseite des Werkstückspanntisches 6 festgelegt, wozu T-Nuten 13 dienen.

### Bezugszeichenliste

- 1: Werkzeugmaschine
- 2: Maschinengestell
- 3: Werkstück
- 4: Werkzeughalterung
- 5: Werkstückaufnahme
- 6: Werkstückspanntisch
- 7: untere Seite
- 8:
- 9: Oberseite
- 10: Schraubverbindung
- 11: auskragender Arm
- 12: Seite
- 13: Befestigungselement (T-Nut)
- 14: Führungsschiene
- 15: Querbalken
- 16: Querbalken
- 17: Fräser

- x: translatorisch Hauptachsrichtung
- y: translatorisch Hauptachsrichtung
- z: translatorisch Hauptachsrichtung
- A: Schwenkachse
- B: Drehachse

## Patentansprüche

1. Werkzeugmaschine (1) mit einem Maschinengestell (2) zur spanenden Bearbeitung eines Werkstücks (3), die eine Werkzeughalterung (4) aufweist, die relativ zu einer unterhalb der Werkzeughalterung (4) angeordneten Werkstückaufnahme (5) translatorisch in drei Achsrichtungen (x, y, z) bewegbar angeordnet ist, wobei die Werkstückaufnahme (5) so ausgebildet ist, dass sie das Werkstück (3) um mindestens eine Achse (A, B) schwenken kann,
**gekennzeichnet durch**
einen Werkstückspanntisch (6), der so ausgebildet ist, dass er, die Werkstückaufnahme (5) überbrückend, fest am Maschinengestell (2) angeordnet werden kann.

2. Werkzeugmaschine nach Anspruch 1,
**dadurch gekennzeichnet,**
**dass** die Werkstückaufnahme (5) so ausgebildet ist, dass sie das Werkstück (3) um zwei zueinander senkrechte Achsen (A, B) verlagern kann, von denen die eine Achse eine Schwenkachse (A) und die andere Achse eine Drehachse (B) ist.

3. Werkzeugmaschine nach Anspruch 1 oder 2,
**dadurch gekennzeichnet,**
**dass** der Werkstückspanntisch (6) mit einer Schraubverbindung (10) am Maschinengestell (2) festlegbar ist.

4. Werkzeugmaschine nach einem der Ansprüche 1 bis 3,
**dadurch gekennzeichnet,**
**dass** der Werkstückspanntisch (6) an seinen seitlichen Endbereichen je zwei auskragende Arme (11) aufweist, mit denen er am Maschinengestell (2) festlegbar ist.

5. Werkzeugmaschine nach einem der Ansprüche 1 bis 4,
**dadurch gekennzeichnet,**
**dass** der Werkstückspanntisch (6) an seiner im in der Werkzeugmaschine (1) angeordneten Zustand der Werkzeughalterung (4) zugewandten Seite (12) eine Anzahl Befestigungselemente (13), insbesondere T-Nuten, aufweist.

6. Werkzeugmaschine nach einem der Ansprüche 1 bis 5,
**dadurch gekennzeichnet,**
**dass** der Werkstückspanntisch (6) als Gusskonstruktion aufgeführt ist.

7. Werkzeugmaschine nach einem der Ansprüche 1 bis 6,
**dadurch gekennzeichnet,**
**dass** sie eine Fräsmaschine ist.

## Claims

1. A machine tool (1) having a machine frame (2) for machining a work piece (3), having a tool holder (4) that is disposed so as to be translatably movable in three axes (x, y, z) relative to a work piece support (5), wherein the work piece support (5) is constructed so as to be able to swivel the work piece (3) at least about an axis (A, B), **characterized by** a work piece clamping table (6) that is constructed in such manner that it is able to be placed over the work piece support (5) and attached firmly to the machine frame (2).

2. The machine tool as recited in claim 1,
**characterized in that**
the work piece support (5) is constructed so that it is able to shift the work piece (3) about two axes (A, B) that are perpendicular to each other, of which the one axis is a horizontal swivel axis (A) and the other axis (B) is a vertical swivel axis.

3. The machine tool as recited in claim 1 or 2,
**characterized in that**
the work piece clamping table (6) is securely attachable to the machine frame (2) with a threaded connection (10).

4. The machine tool as recited in any of claims 1 to 3,
**characterized in that**
the lateral end areas of the work piece clamping table (6) are each equipped with two protruding arms (11) with which it is attachable to the machine frame (2).

5. The machine tool as recited in any of claims 1 to 4,
**characterized in that**
the side (12) of the clamping table (6) that faces the tool holder (4) when it is installed in the machine tool (1) is furnished with a plurality of fixing elements (13), particularly T-slots.

6. The machine tool as recited in any of claims 1 to 5,
**characterized in that**
the work piece clamping table (6) is of cast iron construction.

7. The machine tool as recited in any of claims 1 to 6,
**characterized in that**
it is a milling machine.

## Revendications

1. Machine-outil (1) avec un bâti de machine (2) pour l'usinage par enlèvement de copeaux d'une pièce à usiner (3), comportant une fixation d'outil (4), qui par rapport à une fixation de pièce à usiner (5) disposée sous la fixation d'outil (4) est disposée de façon amovible en translation dans trois directions d'axe (x, y, z), la fixation de pièce à usiner (5) étant conçue de sorte à ce que la pièce à usiner (3) puisse pivoter autour d'au moins un axe (A, B), **caractérisée par** une table de serrage de pièce à usiner (6) qui est conçue de sorte à pouvoir être fixement disposée sur le bâti de machine (2) en chevauchant la fixation de pièce à usiner (5).

2. Machine-outil selon la revendication 1, **caractérisée en ce que** la fixation de pièce à usiner (5) est conçue de sorte à pouvoir déplacer la pièce à usiner (3) autour de deux axes perpendiculaires l'un par rapport à l'autre (A, B), dont l'un des axes est un axe de pivotement (A) et l'autre axe est un axe de rotation (B).

3. Machine-outil selon la revendication 1 ou 2, **caractérisée en ce que** la table de serrage de pièce à usiner (6) est susceptible d'être immobilisée sur le bâti de machine (2) avec un assemblage par boulons (10).

4. Machine-outil selon l'une quelconque des revendications 1 à 3, **caractérisée en ce que** la table de serrage de pièce à usiner (6) comporte sur chacune de ses zones d'extrémité latérale deux bras faisant saillie (11) à l'aide desquels elle peut être immobilisée sur le bâti de machine (2).

5. Machine-outil selon l'une quelconque des revendications 1 à 4, **caractérisée en ce que** la table de serrage de pièce à usiner (6) comporte sur son côté (12) faisant face à la fixation d'outil (4), en position disposée dans la machine-outil (1) un nombre d'éléments de fixation (13), notamment des rainures en T.

6. Machine-outil selon l'une quelconque des revendications 1 à 5, **caractérisée en ce que** la table de serrage de pièce à usiner (6) est réalisée sous la forme d'une structure en fonte.

7. Machine-outil selon l'une quelconque des revendications 1 à 6, **caractérisée en ce qu'**il s'agit d'une fraiseuse.
